# EUROPÄISCHE PATENTSCHRIFT

(11) **EP 1 054 828 B1**
(45) Veröffentlichungstag und Bekanntmachung des Hinweises auf die Patenterteilung: **11.09.2002**
(21) Anmeldenummer: 99903531.4
(22) Anmeldetag: 12.02.1999
(51) Int. Cl.: B65G 59/10, B65G 59/08

(54) **VORRICHTUNG ZUM ENTSTAPELN VON BEHÄLTERN**
DEVICE FOR UNSTACKING CONTAINERS
DISPOSITIF DE DESEMPILAGE DE CONTAINERS

(30) Priorität: 13.02.1998 AT 25998
(43) Veröffentlichungstag der Anmeldung: 29.11.2000
(73) Patentinhaber: Knapp Logistik Automation GmbH, 8075 Hart bei Graz (AT)
(72) Erfinder: FREUDELSPERGER, Karl, A-8075 Hart bei Graz (AT)
(74) Vertreter: Weinzinger, Arnulf, Dipl.-Ing.
(86) Internationale Anmeldenummer: AT9900038
(87) Internationale Veröffentlichungsnummer: WO99041172

(56) Entgegenhaltungen:
- US-A- 5 013 213

## Beschreibung

Die Erfindung betrifft eine Vorrichtung zum automatischen Entstapeln von ineinander gestapelten liegenden Behältern gemäß dem einleitenden Teil von Anspruch 1.

Behälter, welche in der Regel eine Pyramidenstumpf-Form aufweisen, also schräge Wände haben, werden z.B. in Warenlagern oder Kommissionieranlagen in Stapeln gelagert, und sie müssen vor dem Gebrauch wieder entstapelt und zur Befüllung einzeln zugeführt werden. Die Entstapelung sollte dabei rasch und schonend sowie insbesondere automatisiert ablaufen, da die einzelnen Behälter bevorzugt im Takt einer Fördertechnik zugeführt werden und eine händische Entstapelung sehr arbeitsaufwendig wäre.

Eine automatische Entstapelung ist in der DE 3 042 903 A beschrieben. Dabei ist ein Hebezeug vorgesehen, das an dem jeweils obersten Behälter eines vertikalen, auf einem Förderband herantransportierten Behälterstapels angreift, diesen anhebt und auf ein Förderband absetzt. Nachteilig ist hierbei, dass das Hebezeug relativ aufwendig konstruiert werden muss, vor allem da es Behälter in immer anderen Höhen ergreifen können muss; überdies sind die vertikalen Behälterstapel problematisch, wenn sie über größere Strecken herantransportiert werden müssen, da sie bei großen Stapelhöhen eine geringe Stabilität aufweisen und bei einem ruckartigen Anfahren oder Halten leicht umstürzen.

Gemäß der US 4 915 578 A wird ein vertikaler Behälterstapel von oben auf eine Haltervorrichtung gebracht und jeweils der unterste Behälter freigelassen, so dass er auf ein darunter befindliches Förderband fällt, mit dessen Hilfe er abtransportiert wird. Im einzelnen liegen zwei einander gegenüberliegende Flanschränder der Behälter auf vorstehenden Zahnleisten einer Kette auf, welche die Behälter noch als Stapel nach unten führen. Eine zweite, in Gegenrichtung und schneller laufende Kette schiebt mit Vorsprüngen, die von oben auf die beiden einander gegenüberliegenden Ränder des untersten Behälters aufsetzen, diesen untersten Behälter vom Stapel nach unten, so dass er schließlich auf das Förderband fällt und abtransportiert wird. Von Nachteil ist auch hier, dass der Stapel vertikal vorliegt, wodurch die bereits beschriebene Kippgefahr, v.a. bei größeren Stapelhöhen, gegeben ist. Überdies müssen dadurch die verwendeten Vorrichtungen hoch gebaut werden, was die Konstruktion verteuert. Der Behälterstapel darf eine gewisse Höhe auch deswegen nicht überschreiten, da das Gewicht sonst zu groß wird und der Stapel nicht mehr von der Vorrichtung getragen werden kann.

In der US 4 983 098 A ist eine gattungsgemäße Vorrichtung zum Vereinzeln von becherförmigen konischen Behältern vor dem Befüllen und Verschließen beschrieben, wobei die Behälter in vertikalen Stapeln angeliefert werden, die umgelegt werden. Vom liegenden Behälterstapel wird der vorderste Behälter von vertikal beweglichen Haltewinkeln erfasst, die dann zusammen mit dem vordersten Behälter horizontal bewegt werden, um ihn vom übrigen Stapel wegzuziehen. Der zweite Behälter wird währenddessen von gleichartigen, vertikal beweglichen Haltewinkeln zurückgehalten. Der vorderste Behälter läuft zwecks Aufrichtung gegen einen schwenkbaren Haken, der den oberen Behälterrand innen erfasst, so dass der Behälter mit seinem oberen Rand abgebremst wird, während er auf dem Förderer weiter transportiert wird; dadurch wird der Behälter hochgekippt. Nachteilig wirkt sich dabei aus, dass die Haltewinkel, die mit ihren einen Schenkeln die Behälterränder hintergreifen, genau auf die Behälter abgestimmt sein müssen, und dass ihre Vertikalbewegung eine relativ komplexe Antriebseinrichtung erfordert, die teilweise seitlich des Förderers angebracht werden muss.

In der US 4 054 212 A ist schließlich eine Vorrichtung zum Abwärtskippen von becherförmigen Behältern mit dem Boden voran beschrieben, wobei die Vereinzelung in einem Getränkeautomat erfolgen soll. Die Becher werden von schwenkbaren Stößelarmen über Bogenschienen vorgeschoben, bis sie in einen Halter auf einem Förderer fallen. Der zweite Becher des Stapels wird währenddessen durch Greiffinger zurückgehalten. Diese Konstruktion ist zum Vereinzeln von Bechern vorgesehen und für Behälter mit wesentlich größerer Masse kaum geeignet.

In der US 5 013 213 A wird eine gattungsgemäße Vorrichtung zum Entstapeln eines liegenden Stapels von Schachteln oder Körben beschrieben, wobei ein Greifsystem zwei Wände der vordersten Schachtel durch Einklemmen jeder Wand zwischen jeweils zwei Greifbacken erfasst. Die Arme, an denen die Greifbacken angebracht sind, werden zum Schachtelstapel hin und vom Schachtelstapel weg bewegt. Nachdem der Arm zum Schachtelstapel hin bewegt wurde, werden die äußeren Greifbacken gegen die inneren Greifbacken geschwenkt, wodurch die Wände der Schachtel zwischen den Greifbacken eingeklemmt werden. Durch ein Wegbewegen des Armes vom Schachtelstapel wird die erste Schachtel aus dem Schachtelstapel an einem Anschlag vorbei, der zur Platzierung des Schachtelstapels auf dem Förderband dient, herausgezogen.

Es ist Aufgabe der Erfindung, eine Vorrichtung zum Entstapeln wie eingangs angeführt vorzusehen, bei der ein Vereinzeln der ineinander gestapelten Behälter in rascher und zuverlässiger Weise, unter Anwendung einfacher konstruktiver Maßnahmen, sowie mit einer großen Flexibilität hinsichtlich der Behälterdimensionen ermöglicht wird.

Zur Lösung dieser Aufgabe sieht die Erfindung eine Vorrichtung wie in Anspruch 1 definiert vor. Vorteilhafte Ausführungsformen und Weiterbildungen sind Gegenstand der Unteransprüche.

Bei der vorliegenden Vorrichtung kann wegen des liegenden Behälterstapels die Bauhöhe der Vorrichtung niedrig sein, wobei auch die Behälter nicht oder nur wenig gehoben werden müssen. Dadurch ist die "Überkopf"-Anordnung der Halter unproblematisch. Durch die Verwendung von Druckzylindern für die Greifeinrichtung wird eine einfache Bauweise ermöglicht, wobei nichtsdestoweniger ein einfaches, sicheres und rasches Ergreifen des vordersten Behälters möglich ist. Da die Druckzylinder horizontale Achsen auf demselben Niveau aufweisen, wird der vorderste Behälter zwischen den Druckzylindern festgehalten, ohne dass es zu einem Kippen oder Verrutschen des Behälters kommt.

Der gesamte liegende Behälterstapel kann durch einen Hubmechanismus von der Unterlage angehoben werden, bevor der vorderste Behälter wegbewegt wird, wobei der Hubmechanismus z.B. zwischen den Rollen eines als Unterlage vorgesehenen Rollenförderers hindurchgreifen kann; der Hubmechanismus kann aber auch mit seitlich unten am Behälterstapel angreifenden Schienen oder Hubleisten realisiert werden, wobei dann die Stapel-Unterlage auch durch einen Bandförderer gebildet sein kann. Das Anheben des Behälterstapels verhindert zuverlässig ein Schleifen des ersten Behälters entlang der Unterlage, während er vom Behälterstapel weggezogen wird. Der Energieaufwand wird dadurch minimiert, abgesehen von der Schonung der Behälter, und des Förderers.

Die erfindungsgemäß vorgesehenen Druckzylinder können kraftschlüssig oder formschlüssig am jeweiligen Behälter angreifen, und sie werden zweckmäßig nach Wegbewegen des jeweiligen Behälters vom übrigen Stapel und nach seinem Verschwenken einfach vom Behälter gelöst, so dass dieser auf die Unterlage fallengelassen wird; die Fallhöhe kann dabei niedrig sein, so dass ein schonendes "Absetzen" der Behälter nichtsdestoweniger sichergestellt ist. Die Druckzylinder sind dabei so auszulegen, dass sie die entsprechenden Querkräfte übertragen können; gegebenenfalls kann auch ein Hebelmechanismus vorgesehen werden. Von besonderem Vorteil für das Verschwenken der Behälter beim Vereinzeln ist, wenn die Druckzylinder drehbar an den Haltern angeordnet sind.

Besonders vorteilhaft ist, wenn die Halter linear, parallel zum Behälterstapel verschiebbar gelagert sind. Dadurch wird der vorderste Behälter linear vom übrigen Behälterstapel wegbewegt. Der vorderste Behälter wird zweckmäßig jeweils an seinem nach hinten liegenden Öffnungsrand oder Bund erfaßt und mit seinem Boden nach vorne weisend vom Behälterstapel geschoben, wobei der Behälterboden des vordersten Behälters zumindest in der Anfangsphase des Abschiebens vom Stapel in Abstand oberhalb der Unterlage vorliegt, so dass kein Scheuern des Behälters auf der Unterlage auftritt.

Die Druckzylinder bzw. deren Kolbenstangen können koaxial ausgerichtet und mit einem Gummikopf oder dergl. versehen sein, mit dem sie weich und praktisch unverrutschbar am Behälter angepresst werden können. Im Fall von drehbaren Druckzylindern wird ein einfaches Schwenken des vordersten Behälters um die horizontale Achse der Druckzylinder in eine im wesentlichen horizontale Lage ermöglicht, d.h. mit der Öffnung nach oben, wobei nur die Druckzylinder eine Drehbewegung durchführen, ohne dass noch andere Teile der Greifeinrichtung gedreht werden müssten.

Des weiteren ist von Vorteil, wenn die Halter, z.B. Schenkel eines Rahmens, an einer linearen Führung gelagert sind. Dabei kann ein Druckzylinder den Rahmen in Richtung weg vom Behälterstapel drücken, und durch den Rahmen wird sichergestellt, dass beide Seiten des Behälters gleichzeitig erfasst und bewegt werden, wodurch der Behälter exakt gerade ausgerichtet bleibt und nicht z.B. aufgrund eines leichten Verdrehens aus der Längsausrichtung am Behälterstapel durch Verkanten steckenbleibt.

Für ein einfaches Absetzen der Behälter ist es besonders vorteilhaft, wenn der die vereinzelten Behälter aufnehmenden Unterlage eine relativ zu ihr höher angeordnete Kante zum Kippen der einzelnen Behälter vorgeordnet ist, zu der der Behälter mit Hilfe der Greifeinrichtung bzw. durch ein Förderband bewegt wird. Nachdem der vorderste Behälter wie oben beschrieben aus dem Behälterstapel herausbewegt worden ist, wird er liegend, mit dem Behälterboden nach vorne weisend, zu einer Kante bewegt und dort zum Verdehen durch Kippen um die Kante und zum Absetzen auf die auf die Kante folgende Unterlage, z.B. einen Förderer, freigegeben. Der Behälter muss dabei nur ein Stück vom nächsten Behälter gezogen werden und kann mittels eines Förderers, z.B. eines Band- oder Rollenförderers, der Kante zugeführt werden. Sobald ein entsprechend großer Teil des Behälters über die Kante hinausschaut, kippt dieser zufolge der Schwerkraft mit dem Behälterboden nach unten auf die etwas tiefer gelegene Unterlage, und er kommt dort zu stehen. Von dort wird er sofort abgeführt, so dass Platz für den nächsten Behälter geschaffen wird. Die Kante wird dabei möglichst nahe der eigentlichen Entstapelungsvorrichtung vorgesehen, so dass der einzelne liegende Behälter nicht weit transportiert werden muss, bevor er auf die Unterlage kippt. Es ist auch konstruktiv möglich, die Höhendifferenz dieser zwei Unterlagen einstellbar zu machen, z.B. indem die nachgeordnete Unterlage in der Höhe verschiebbar ist, oder indem sie um eine Achse schwenkbar gelagert ist, wobei gegebenenfalls eine Steigung oder ein Gefälle zustande kommt. Dadurch können verschieden große Behälter vereinzelt werden. Damit die Behälter nicht entlang der Unterlage schleifen, sind die Druckzylinder hier bevorzugt nicht drehbar, sondern fest an den Haltern angeordnet, sie tragen somit die gesamte Masse des Behälters.

Eine weitere bevorzugte Vorrichtung ist gekennzeichnet durch eine Kurvensteuerung für die Halter, um den vordersten Behälter gemäß einer vorgegebenen, insbesondere bogenförmigen Bewegung aus dem Behälterstapel herauszubewegen und unter Schwenken in eine Lage mit der Behälteröffung nach oben auf die Unterlage, z.B. den Förderer, abzusetzen. Wie hoch der Behälter in die Höhe bewegt wird, hängt von der Tiefe des Behälters ab. Durch die Schwenkbewegung kann jedenfalls ein Schleifen des Behälters auf der Unterlage, und ein dadurch erhöhter Reibungswiderstand weitgehend verhindert werden. Dabei können die Behälteröffnungen der Behälter im liegenden Behälterstapel nach vorne weisen, wodurch das Herausziehen und Verdrehen des jeweils vordersten Behälters besonders einfach in einer einzigen kontinuierlichen Bewegung realisiert werden kann. Die Behälter können aber auch mit dem Behälterboden nach vorne weisen, wobei dann das Schwenken des Behälters erst nach dem Abziehen des vordersten Behälters vom Stapel veranlasst wird.

Wie bereits angedeutet, ist es bei der zuletzt genannten Ausführungsform zur Bewegungsminimierung beim Entstapeln von Vorteil, wenn der vorderste Behälter mit seiner Öffnung nach vorne weisend vom liegenden Behälterstapel wegbewegt wird. Während des Heraus- und In-die-Höhe-Bewegens des vordersten Behälters schwenkt dieser, am einfachsten dadurch, dass der Schwerpunkt des Behälters hinter bzw. unter dem Angriffspunkt der Greifeinrichtung am Behälter liegt, wodurch er bestrebt ist, die tiefstmögliche Position einzunehmen, automatisch in eine Lage mit der Behälteröffnung nach oben.

Für das gesteuerte Herausziehen des ersten Behälters aus dem Behälterstapel ist es auch vorteilhaft, wenn die Halter, z.B. Schenkel eines Rahmens, schwenkbar gelagert sind. Dadurch werden die verschiedenen Einzelbewegungen des vordersten Behälters auf sehr einfache Weise miteinander kombiniert bzw. koordiniert: Gleichzeitig mit dem Herausziehen des ersten Behälters aus dem Behälterstapel wird die Achse der Druckzylinder und damit auch der Behälter durch die Schwenkbewegung der Halter bogenförmig vor sowie in die Höhe bewegt, was durch die schrägen Behälterwände unterstützt wird, da so ein Schleifen des Behälters auf der Unterlage verhindert wird; beim Weiterschwenken erreicht der Behälter schließlich seine Position mit der Öffnung nach oben.

Den Haltern kann auch eine Kulissenführung oder ein Viergelenk zur Bewegungssteuerung zugeordnet sein. Dabei kann die Bewegung der Halter und damit der Behälter optimiert werden, so dass nur ein minimales Hochheben des jeweils vordersten Behälters während des Wegziehens vom Stapel vorgesehen wird, ohne den Behälter unnötig weit hochzuheben, um ihn gleich darauf wieder abzusenken und auf die Unterlage zu stellen.

Um die Translations- oder Schwenkbewegung der Halter effizient durchzuführen, sind vorzugsweise als Antrieb für die Halter Druckzylinder vorgesehen.

Für ein besonders festes Ergreifen des vordersten Behälters ist es von Vorteil, wenn die Greifeinrichtung Greifbacken zum Anpressen an die Behälter aufweist, die an Schwenkhebeln angebracht sind, an denen die Druckzylinder angreifen. Dabei sind die Schwenkhebel z.B. an Konsolen, die fest an den Haltern angebracht sind, schwenkbar gelagert. Durch ein Betätigen der Druckzylinder werden die Schwenkhebel um ihre Schwenkachse geschwenkt, wodurch die Greifbacken an den vordersten Behälter angepresst werden. Klemmt der vorderste Behälter im nachfolgenden Behälter, so werden die Greifbacken durch die Vorwärtsbewegung der Halter weitergeschwenkt und fester an den vordersten Behälter angepresst. Dadurch wird die Presswirkung verstärkt und der vorderste Behälter zuverlässig aus dem Behälterstapel herausbewegt.

Für das Herausziehen des ersten Behälters aus dem Behälterstapel wird eine besonders einfache Konstruktion ermöglicht, wenn die Klemmeinrichtung einen zumindest den zweiten Behälter im Stapel nach unten drückenden Druckzylinder, vorzugsweise in Verbindung mit einem den gesamten liegenden Behälterstapel anhebenden Hubmechanismus, enthält.

Um ein sicheres Positionieren und Zurückhalten des Behälterstapels zu gewährleisten, kann der Klemmeinrichtung auch ein aus dem Weg der Behälter bewegbarer, z.B. schwenkbarer Anschlag für den Behälterstapel zugeordnet sein. Der herantransportierte Behälterstapel wird durch den Anschlag in genau der richtigen Position für das klemmende Festhalten gestoppt. Während dann die Greifeinrichtung den vordersten Behälter erfasst, kann der Anschlag rasch aus dem Weg bewegt, z.B. geschwenkt werden, so dass das Abziehen des vordersten Behälters vom Behälterstapel nicht durch ihn behindert wird. Nachdem dieser Behälter entfernt wurde, kann der Anschlag wieder aktiviert werden, um den dann weiter nach vor transportierten restlichen Behälterstapel wieder in der richtigen Position bezüglich der Klemmeinrichtung anzuhalten. Dabei kann auch je ein Anschlag auf einer Längsseite des Behälterstapels an der Unterlage, z.B. am Förderer, angebracht sein.

Des weiteren ist von Vorteil, wenn eine Triggerlichtschranke zur Betätigung des Druckzylinders und/oder Anschlags vorgesehen ist. Die Triggerlichtschranke kontrolliert dabei exakt das zeitliche korrekte Ansteuern des Druckzylinders bzw. des Anschlags, wenn der Behälterstapel jeweils vorbewegt wird. Die Triggerlichtschranke kann beispielsweise an der Unterlage im Bereich der Hubeinrichtung oder seitlich am Gestell angebracht sein.

Von Vorteil ist es auch, wenn eine Überwachungslichtschranke zur Erfassung der verbleibenden Behälter des Stapels vorgesehen ist. Dadurch kann die Klemmeinrichtung abgeschaltet werden, wenn ein Behälterstapel vereinzelt wurde, bzw. kann rechtzeitig ein weiterer Behälterstapel angefordert werden.

Gegebenenfalls kann ein vertikaler Behälterstapel vor dem Entstapeln auf einen Förderer umgelegt werden, um den liegenden Behälterstapel vorzusehen. Dadurch können die Behälter zuvor in einem vertikalen Behälterstapel gestapelt werden, was in der Regel einfacher ist als ein liegendes Stapeln. Zur Entstapelung werden zweckmäßig bereits umgelegte, liegende Behälterstapel zugeführt, so dass sich ihr Herantransport problemlos bewerkstelligen lässt, wobei sich auch mehrere umgelegte Behälterstapel vor der Entstapelung ineinanderschieben können.

Es ist demgemäß günstig, wenn der Greifeinrichtung eine pneumatisch betätigte Stapelumlegeeinrichtung vorgeordnet ist. Dadurch kann das Stapeln der Behälter in vertikaler Form und das Vereinzeln in liegender Form erfolgen. Durch die pneumatische Betätigung wird eine einfache Ansteuerung und eine zuverlässige Funktion der Stapelumlegeeinrichtung erzielt.

Eine in der Funktion vorteilhafte Stapelumlegeeinrichtung wird erhalten, wenn sie eine in der Ruhestellung vertikale, um eine horizontale Achse schwenkbare Stapel-Gleitstütze enthält. Der vertikal stehende Behälterstapel lehnt an dieser Gleitstütze. Die Gleitstütze ist zumindest so lang, wie der Behälterstapel hoch ist, um diesen während der Umlegbewegung zu stützen. Die Gleitstütze schwenkt, z.B. mit Hilfe eines Druckzylinders, um eine obere horizontale Achse, wobei das untere Ende die untersten Behälter des Behälterstapels aus der Standposition bewegt, so dass der Stapel zu kippen beginnt. Für einen minimalen Kraftaufwand ist die Achse, um die die Gleitstütze schwenkt, im oberen Bereich der Gleitstütze angebracht, während der sie antreibende Druckzylinder möglichst weit unten an der Gleitstütze angreift, wodurch die Hebelwirkung bestmöglich ausgenützt wird. Der Behälterstapel wird von der Gleitstütze beim Umlegen gestützt, wobei die Schwenkbewegung der Gleitstütze so fortgesetzt wird, dass sowohl die Gleitstütze als auch der Behälterstapel eine immer schrägere Lage einnehmen, während der unterste Behälter aber immer in "Boden"kontakt (mit dem Förderer) bleibt. Sobald eine gewisse Mindestschräge erreicht ist, rutscht der Behälterstapel entlang der Gleistütze abwärts und kommt so zum liegen. Dieses Rutschen wird durch ein geführtes Bewegen der untersten bzw. vordersten Behälter auf der Unterlage gefördert, z.B. indem die Unterlage ein angetriebener Förderer, z.B. Bandförderer, ist. Dieser kann den liegenden Behälterstapel sogleich wegtransportieren, um dem nächsten Behälterstapel Platz zu machen. Der nächste, stehende Behälterstapel wird durch einen Förderer zur Umlegeeinrichtung gebracht, so dass der Stapel wieder an die mittlerweile in die Ausgangsposition zurückgeschwenkte Gleitstütze ansteht.

Eine besonders vorteilhafte Konstruktion sieht vor, dass gegenüber der Gleitstütze eine einen Stapel-Anschlag beim Umlegen des Stapels bildende Rolle an einem Gestell angebracht ist. Diese Rolle kann an einem Querholm des Gestells montiert sein, so dass der obere Stapelbereich an der Rolle anliegt und von dieser zurückgehalten wird, während die Schwenkbewegung der Gleitstütze erfolgt. Denkbar wären auch mehrere Rollen, die im Abstand voneinander am Gestell angebracht sind.

Eine einfache, effiziente Konstruktion wird auch erhalten, wenn die Stapelumlegeeinrichtung abgewinkelte Gabelarme enthält, die um ihre waagrechte Winkelachse schwenkbar gelagert sind. Dabei wird der - vertikale - Behälterstapel auf den einen Gabelarmen bis zur Anlage an den dazu etwa rechtwinkelig angeordneten, hochstehenden zweiten Gabelarmen geschoben. Die hochstehenden Gabelarme werden anschließend in die Horizontale geschwenkt und wirken dabei als Stütze für den Stapel, der zugleich von den anderen, ursprünglich horizontalen Gabelarmen, die in eine vertikale Position hochgeklappt werden, gehalten wird, so dass der Stapel dabei immer kontrolliert manipuliert gehalten wird.

Eine besonders bevorzugte Konstruktion ist dadurch gekennzeichnet, dass die Stapelumlegeeinrichtung relativ zueinander bewegliche Stützen für den Behälterstapel aufweist, denen gesonderte Druckzylinder zu ihrer unabhängigen Verschwenkung zugeordnet sind. Diese Stützen können z.B. zwei Gabelarmpaare sein, die unabhängig voneinander um eine gemeinsame horizontale Achse oder um gesonderte eigene horizontale Achsen im Bereich der Unterlage, d.h. des Förderers, auf und ab schwenkbar sind.

Für einen kontinuierlichen Ablauf beim automatischen Entstapeln ist eine Behälterdreheinrichtung zum Verdrehen der entstapelten kistenförmigen Behälter aus ihrer Querausrichtung in eine Längsausrichtung vorteilhaft. Dadurch werden die Behälter automatisch in der z.B. üblicherweise in Komissionieranlagen gewünschten Längs-Ausrichtung weitertransportiert, und zwar auch, wenn die Behälter nach dem Entstapeln in einer Querausrichtung erhalten werden, was häufig deshalb der Fall sein wird, da im liegenden Stapel die Behälter aus Stabilitätsgründen mit der größeren Seitenfläche auf dem Förderer liegend herantransportiert werden.

Für die Anwendung in Komissionieranlagen ist es hier auch von Vorteil, wenn der Behälterdrehvorrichtung eine Steuereinheit zum Verdrehen jedes Behälters mit einer vorbestimmten Seite nach vorne zugeordnet ist. In Kommissionieranlagen werden zumeist an den vorderen Wänden der Behälter Belege, Codierungen etc. angebracht, die für das Steuern des Behälters durch die Kommissionieranlage und für seine Befüllung wichtig sind. Hierbei sind Leseeinheiten in der Komissionieranlage vorgesehen, für deren ordnungsgemäße Funktion daher die korrekte Ausrichtung der Behälter von Bedeutung ist.

Eine besonders einfache Konstruktion der Dreheinrichtung besteht darin, dass sie zwei nebeneinander am als Unterlage vorgesehenen Förderer angebrachte, selektiv über die Förderebene ausschiebbare Anschläge, z.B. Zylinder, aufweist, wonach sich der Förderer vorzugsweise verengt. Je nachdem in welche Richtung der Behälter gedreht werden soll, senkt sich der eine oder andere Zylinder, so dass er nicht aus der Förderebene heraussteht. Der herantransportierte Behälter wird auf seiner einen Seite von dem einen herausstehenden Zylinder gestoppt, während die andere Seite des Zylinders durch den Förderer weiterbewegt wird. Dadurch kommt es zu einer Drehung des Behälters um den herausstehenden Zylinder, an dem er vorbeigeführt wird. Die Führungen zu beiden Seiten des Förderers verengen sich in Transportrichtung, bis der Abstand zwischen ihnen nur den Durchgang eines in Längsrichtung ausgerichteten Behälters zulässt. Der schon etwas gedrehte Behälter wird in dieser Verengung zur gänzlichen Längsausrichtung gezwungen.

Wie bereits erwähnt können gemäß der vorliegenden Erfindung problemlos Stapel mit verschieden hohen Behältern entstapelt werden. Damit die verschieden hohen Behälter in der Folge auch wirklich für die jeweilige Aufgabe spezifisch genützt werden können, müssen sie nach ihren Höhen aufgeteilt werden. Demgemäß ist vorzugsweise eine Weicheneinrichtung zur Aufteilung der vereinzelten kistenförmigen Behälter, z.B. je nach Behälterhöhe, auf verschiedene Förderstrecken vorgesehen. Meistens sind dabei jeweils zwei Folgeförderer vorhanden, wobei mindestens ein schwenkbarer Hebel oder Schwenkarm jeweils nur den gewünschten Folgeförderer offen lässt, durch den der Behälter befördert werden soll, und der den anderen Folgeförderer versperrt.

Für eine einfache Erkennung der Behälterhöhe des gerade herantransportierten Behälters ist es vorteilhaft, wenn der Weicheneinrichtung ein Behälterhöhen-Sensor, z.B. mit Lichtschranken in verschiedenen Höhen, vorgeordnet ist. Wenn ein Behälter mit einer bestimmten Höhe daran vorbeigefördert wird, nimmt der Sensor dies wahr und gibt ein Signal entsprechend der erfassten Behälterhöhe zum Schwenken des Hebels oder Schwenkarms in eine bestimmte Position ab.

Die Erfindung wird nachstehend anhand von in der Zeichnung dargestellten bevorzugten Ausführungsbeispielen, auf die sie jedoch nicht beschränkt sein soll, noch weiter erläutert. Im einzelnen zeigen in der Zeichnung:
Die Fig. 1a bis 1d schematisch verschiedene Phasen des Betriebs einer besonders bevorzugten Vorrichtung zum automatischen Entstapeln von ineinandergestapelten Behältern in Seitenansicht, wobei der vorderste Behälter mittels einer linear verschiebbaren Greifeinrichtung vom Behälterstapel wegbewegt wird;
Fig. 1e eine schematische Stirnansicht der in Fig. 1a dargestellten Vorrichtung;
Fig. 2a bis 2d in entsprechenden schematischen Seitenansichten eine andere Vorrichtung zum automatischen Entstapeln von ineinandergestapelten Behältern, wobei der vorderste Behälter gemäß einer bogenförmigen Bewegung mittels einer Greifeinrichtung aus dem übrigen Behälterstapel herausgezogen und unter Schwenken in eine Lage mit der Behälteröffnung nach oben auf die Unterlage abgesetzt wird;
Fig. 2e eine schematische Stirnansicht der in Fig. 2a dargestellten Entstapelungsvorrichtung, wobei der Einfachheit halber auf der linken Seite des Behälterstapels ein Anschlag gezeigt ist, auf der rechten Seite des Stapels ein solcher Anschlag jedoch weggelassen wurde, um einen dahinter befindlichen Hubmechanismus-Teil schematisch zu veranschaulichen;
die Fig. 3a bis 3d in vier schematischen Seitenansichten eine Stapelumlegeeinrichtung in verschiedenen Phasen des Betriebs beim Umlegen eines vertikalen Behälterstapels;
Fig. 3e eine Draufsicht auf diese Stapelumlegeinrichtung;
die Fig. 4a bis 4c schematisch in drei Ansichten, entsprechend verschiedenen Betriebsphasen, eine Variante einer Stapelumlegeeinrichtung, wobei in Fig. 4a noch ein stehender Behälterstapel in Stirnansicht dargestellt ist, in Fig. 4b eine zugehörige Draufsicht gezeigt ist, und Fig. 4c in einer Ansicht entsprechend Fig. 4a den nun liegenden Behälterstapel veranschaulicht;
Fig. 5a eine Seitenansicht einer Behälterdreheinrichtung zum Längsausrichten der vereinzelten Behälter;
Fig. 5b eine Draufsicht dieser Einrichtung; Fig. 6 eine Weicheneinrichtung zur Aufteilung der Behälter je nach Behälterhöhe auf zwei verschiedene Folgeförderer.
die Fig. 7a bis 7e eine in Verbindung mit der Entstapelung gemäß Fig.1 zu verwendende, besonders bevorzugte Stapelumlegeeinrichtung in Ansicht in verschiedenen Betriebsphasen; und
Fig. 8 eine schaubildliche Ansicht einer bei der Vorrichtung gemäß Fig. 1 zu verwendenden, besonders vorteilhaften Greifeinrichtung.

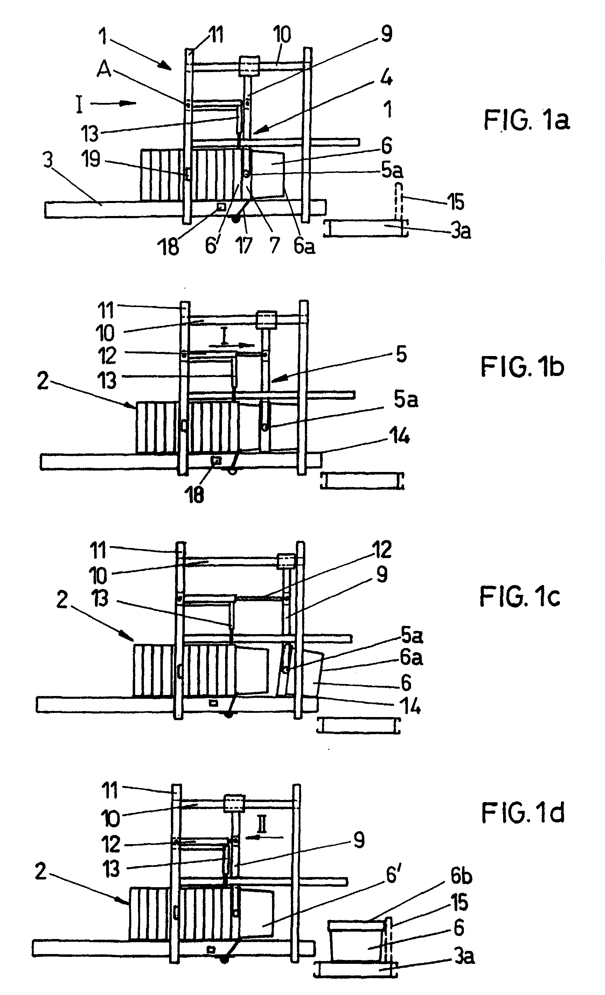

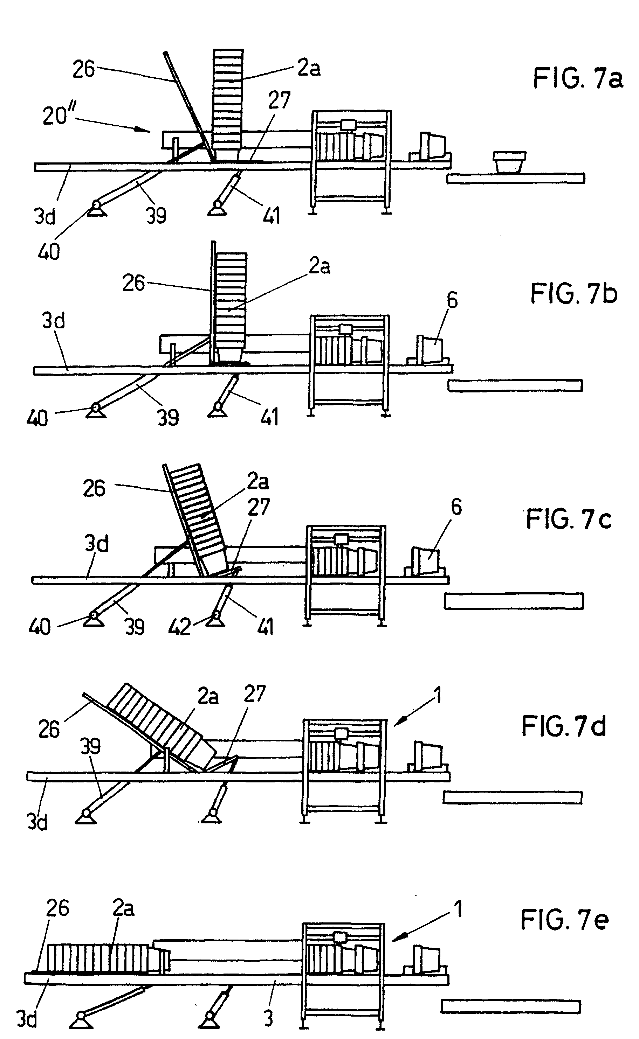

In Fig. 1 ist schematisch in den Einzel-Figuren 1a bis 1e eine Vorrichtung 1 zum automatischen Entstapeln bzw. Vereinzeln von kistenförmigen Behältern eines liegenden Behälterstapels 2 gezeigt, der auf einem als Unterlage vorgesehenen Förderband 3 in Richtung des Pfeils I einer Klemmeinrichtung 4 der Vorrichtung 1 zugeführt wird. Eine Greifeinrichtung 5 erfasst mit Hilfe von seitlichen Druckzylindern 5a den vordersten, mit dem Behälterboden 6a nach vorne gerichteten Behälter 6 des Behälterstapels 2 an einem die Behälteröffnung umgebenden bundförmigen Rand 7. Die Druckzylinder 5a der Greifeinrichtung 5 weisen eine horizontale Achse auf und sind an Haltern 8a,8b angebracht, die durch die Schenkel eines Rahmens 9 gebildet sind. Die Druckzylinder 5a sind dabei in an sich üblicher Weise so an den Schenkeln 8a, 8b angebracht und ausgeführt, dass sie beim Ergreifen der Behälter 6 Querkräfte aufnehmen können; alternativ könnte auch ein Hebelmechanismus vorgesehen werden, der von den Druckzylindern 5a betätigt wird, und der die Querkräfte aufnimmt (vgl. auch Fig.7). Der Rahmen 9 mit den Schenkeln 8a, 8b ist an einer linearen, zur Stapelrichtung des Behälterstapels 2 parallelen Führung 10 eines Vorrichtungs-Gestells 11 gelagert. Durch einen am Gestell 11 bei A befestigten Druckzylinder 12 wird der Rahmen 9 in Richtung des Pfeils I bewegt, wobei der vorderste Behälter 6 vom Behälterstapel 2 abgeschoben wird.

Dabei wird der zweite Behälter 6' im Behälterstapel 2 durch einen mit dem Gestell 11 fest verbundenen Klemm-Druckzylinder 13 nach unten gedrückt, und dadurch wird er daran gehindert, mit dem vordersten Behälter 6 mitgezogen zu werden. Der vorderste Behälter 6 wird bis zu einer Kante 14 vorbewegt. Dies geschieht entweder mit Hilfe der Druckzylinder 5a, die den Behälter 6 erst an der Kante 14 freilassen, oder die Druckzylinder 5a dienen nur zum Herausziehen des Behälters 6 aus dem Behälterstapel 2, wonach sie ihn freilassen, und der Behälter 6 wird mit Hilfe des Förderers 3 zur Kante 14 weitertransportiert. An.der Kante 14 kippt der Behälter 6 aufgrund der Schwerkraft mit dem Boden 6a voran nach unten (s. Fig. 1c), wobei die Druckzylinder 5a den Behälter 6 freilassen, so dass der Behälter 6 mit seiner Öffnung 6b nach oben auf einer Unterlage, z.B. einem Förderer 3a, zu stehen kommt, von wo er abtransportiert wird. Falls der Abtransport auf dem Förderer 3a quer zum Förderer 3 erfolgt, kann eine Führung oder ein Anschlag 15 am Förderer 3a vorhanden sein, damit der heruntergekippte Behälter 6 in einer ausgerichteten Position auf dem Förderer 3a zu stehen kommt. Der Anschlag 15 verhindert auch ein Weiterkippen oder -drehen des Behälters 6.

Nachdem die Druckzylinder 5a den Behälter 6 freigegeben haben, wird der Rahmen 9 mit den Schenkeln 8a, 8b (s. Fig. 1e) in Richtung des Pfeils II (s. Fig. 1d) wieder zurückbewegt, so dass die Druckzylinder 5a den nächsten Behälter 6' im Behälterstapel 2 erfassen können, wenn der Behälterstapel 2 ein entsprechendes Stück vorbewegt wird, wobei der dann zweite Behälter im Stapel 2 wieder mit Hilfe der (pneumatischen) Klemm-Druckzylinder 13 der Klemmeinrichtung 4 festgehalten wird. Der vorstehend beschriebene Vorgang wiederholt sich nun, bis der ursprüngliche zweite Behälter 6' auf den Förderer 3a gekippt ist usw.

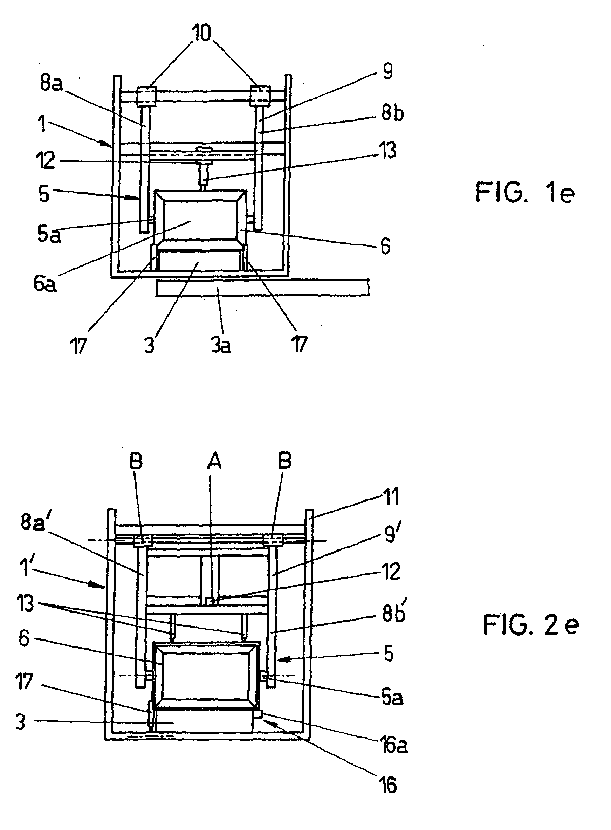

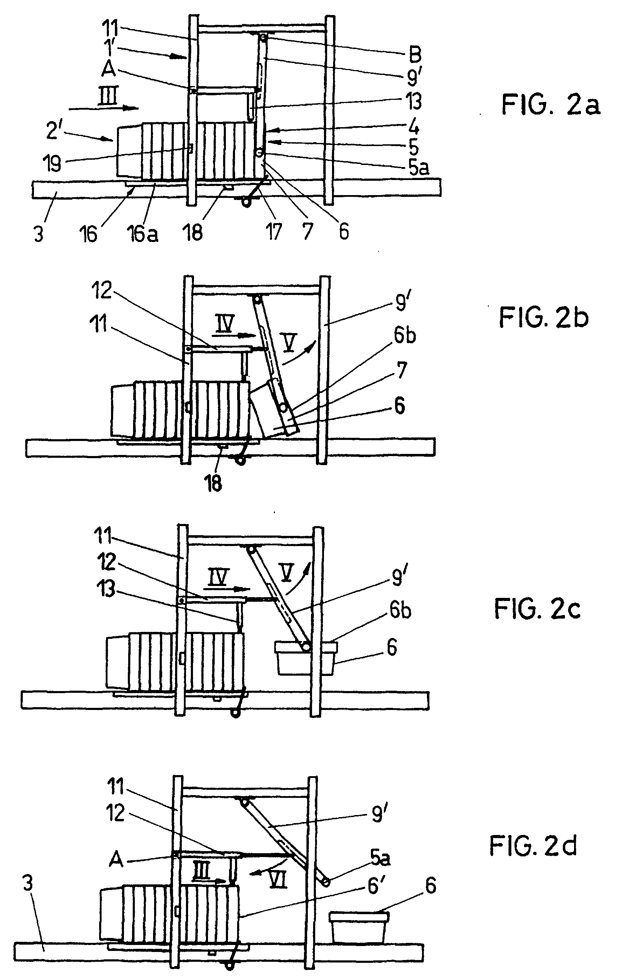

In Fig. 2a bis 2e ist in Darstellungen entsprechend jenen von Fig. 1a bis 1e eine weitere Entstapelungsvorrichtung 1' dargestellt. Auch hier wird ein liegender Behälterstapel 2' vorgesehen, wobei aber die Behälter, z.B. 6, mit der Öffnung 6b nach vorne weisend der Vorrichtung 1' durch einen Förderer 3 in Richtung des Pfeils III zugeführt werden. Druckzylinder 5a einer Greifeinrichtung 5, die wieder eine horizontale Achse aufweisen und an Haltern 8a', 8b' angebracht sind (s. auch Fig. 2e), erfassen den vordersten Behälter 6 wiederum am z.B. bundförmigen Behälterrand 7, hier jedoch, um ihn gemäß einer bogenförmigen Bewegung aus dem Behälterstapel 2' herauszubewegen (s. Fig. 2b und 2c) und unter Schwenken in eine Lage mit der Behälteröffnung 6b nach oben wieder auf den Förderer 3 (oder einen Folge-Förderer) abzusetzen (s. Fig. 2d).

Die Druckzylinder 5a der Greifeinrichtung 5 weisen eine horizontale Achse auf und sind drehbar an ihren Haltern 8a', 8b' gelagert, die wiederum durch die Schenkel eines bügelförmigen Rahmens 9' (s. auch Fig. 2e) gebildet sind; der Rahmen 9' selbst ist hier an seiner Oberseite bei B (s. Fig. 2a) schwenkbar im Vorrichtungs-Gestell 11 gelagert; als Schwenkantrieb ist wieder ein an einem Querholm des Gestells 11 bei A (Fig. 2a, 2d und 2e) befestigter Druckzylinder 12 vorgesehen. Dieser Druckzylinder 12 drückt den Rahmen 9' mit den Schenkeln 8a', 8b' in Richtung des Pfeils IV (s. Fig. 2b und 2c) nach vorne, so dass der Rahmen 9' zusammen mit den Druckzylindern 5a eine bogenförmige Bewegung (s. Pfeil V in Fig. 1b und 1c) ausführt, wodurch der vorderste Behälter 6a us dem Behälterstapel 2' herausgezogen wird. Dabei kann das Ende der Kolbenstange an einem der Höhe nach am Rahmen 9' verschiebbaren Gleitstein (nicht gezeigt) angelenkt sein. Durch den exzentrischen Schwerpunkt des Behälters 6 hinter (unter) dem Angriffspunkt der drehbar an den Haltern bzw. Schenkeln 8a', 8b' gelagerten Druckzylinder 5a am Behälter 6 schwenkt dieser selbsttätig in eine ungefähr waagrechte Lage (s. Fig. 2b und 2c), wobei die Behälteröffnung 6b nach oben weist.

Nachdem der vorderste Behälter 6 von den Druckzylindern 5a losgelassen und mit der Öffnung 6b nach oben auf den Förderer 3 abgesetzt wurde, schwenken die Schenkel 8a', 8b' des Rahmens 9' wieder in die Ausgangsposition zurück (s. Pfeil VI in Fig. 2d), um den nächsten Behälter - den früheren zweiten Behälter 6' im Behälterstapel 2' - zu erfassen, und die beschriebenen Vorgänge werden wiederholt, nachdem der Behälterstapel 2' ein entsprechendes Stück - z.B. gleich einer Bundhöhe - vorgerückt ist.

Damit der vorderste Behälter 6 während der Bewegung weg vom Stapel 2 bzw. 2' nicht auf der Unterlage schleift, ist unter dem Behälterstapel 2 bzw. 2' zu beiden Seiten neben dem Förderer 3 ein Hubmechanismus 16 vorgesehen, vgl. Fig. 2a sowie Fig 2e, rechte Seite. Dieser Hubmechanismus 16 ist mit Schienen oder Hubleisten 16a ausgebildet, die an den über den Förderer 3 quer hinaus stehenden seitlichen Rändern der Behälter 6 des Behälterstapels 2 bzw. 2' von unten angreifen und so den Stapel 2 bzw. 2' in die Höhe drücken. Der Hubmechanismus 16 hebt dabei den Behälterstapel 2 bzw. 2' noch vor dem Herausziehen des ersten Behälters 6 in die Höhe und senkt ihn erst wieder, nachdem sich der vorderste Behälter 6 schon in einem Abstand vom Behälterstapel 2 bzw. 2' befindet. Ein solcher Hubmechanismus 16 wird zweckmäßig auch bei der Vorrichtung 1 gemäß Fig. 1 angebracht, was aber in Fig. 1 nicht dargestellt ist.

Auch gemäß Fig. 2 sind weiters als Klemmeinrichtung 4 zwei Druckzylinder 13 vorgesehen, die den jeweils zweiten Behälter 6' im Behälterstapel 2' nach unten drücken und ihn somit festklemmen, wodurch der zweite Behälter 6' - und alle folgenden Behälter des Stapels 2' - während des Herausbewegens des ersten Behälters 6 zurückgehalten und nicht mit diesem mitgezogen wird bzw. werden.

Zu beiden Seiten des Behälterstapels 2 bzw. 2' ist in den Ausführungsbeispielen gemäß Fig. 1 und Fig. 2 je ein schwenkbarer Anschlag 17 am Förderband 3 angebracht. Dadurch wird der herantransportierte Behälterstapel 2 bzw. 2' in genau der richtigen Position für die Klemmeinrichtung 4 gestoppt. Während die Druckzylinder 5a den vordersten Behälter 6 erfassen, können sich die Anschläge 17 senken, so dass das Herausziehen des vordersten Behälters 6 aus dem Behälterstapel 2 bzw. 2' nicht behindert wird. Während oder nachdem dieser vorderste Behälter 6 auf das Förderband 3 bzw. 3a abgesetzt wurde, kann der Anschlag 17 wieder in seine Wirkstellung hochgeklappt werden.

Unter dem Behälterstapel 2 bzw. 2' ist eine Triggerlichtschranke 18 (s. Fig. 1a, 1b und 2a, 2b) angebracht, die das Aufund Abschwenken des Anschlags 17 und/oder das Aktivieren der Druckzylinder 12 und 13 zeitlich steuert.

Zum Überwachen der verbleibenden Behälter ist weiters eine Überwachungslichtschranke 19 (s. Fig. 1a und 2a) am Gestell 11 angebracht, damit automatisch erfasst werden kann, sobald eine minimale Anzahl von verbleibenden Behältern unterschritten wird.

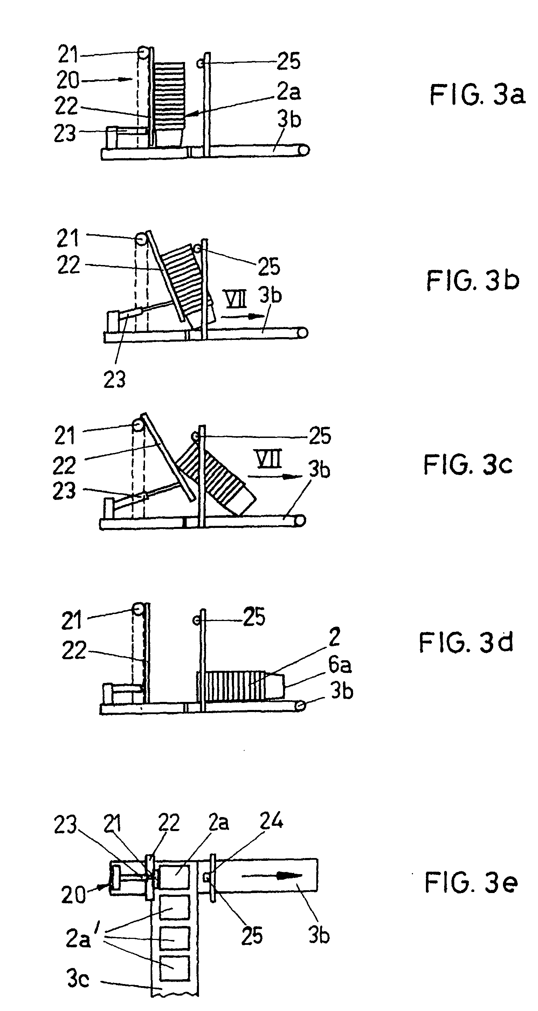

In Fig. 3a bis 3e ist eine Stapelumlegeeinrichtung 20 veranschaulicht, wobei in Fig. 3a bis 3d in schematischen Seitenansichten der Ablauf des Umlegens eines vertikalen Behälter-Stapels 2a dargestellt ist; Fig. 3e zeigt eine schematische Draufsicht dieser Stapelumlegeeinrichtung 20, der mehrere Behälterstapel 2a bzw. 2a' hintereinander zugeführt werden.

Der umzulegende Behälterstapel 2a steht an einer um eine obere Achse 21 schwenkbaren Gleitstütze 22 an (s. Fig. 3a), die durch eine Gleitplatte oder durch miteinander verbundene aufrechte Gleitschienen gebildet sein kann. In Fig. 3b beginnt die Gleitstütze 22, angetrieben durch einen z.B. pneumatischen Druckzylinder 23, um die obere, Gestell-feste Achse 21 zu schwenken, und sie drückt dabei den unteren Bereich des Stapels 2a gemäß der Darstellung in Fig. 3a bis 3e nach rechts, bis dieser auf einem zum Abtransport vorgesehenen Förderer 3b gelangt ist; hierbei kippt der Stapel 2a und stützt sich auf der Gleitstütze 22 ab; im oberen Stapelbereich kommt es zur Anlage an einem Anschlag, der durch eine an einem Querholm 24 des ansonsten nicht näher bezeineten Gestells gelagerte Rolle 25 gebildet ist. Der Förderer 3b zieht den unteren Bereich des Behälterstapel 2a in Richtung des Pfeils VII (s. Fig. 3b und 3c) weg, während der obere Stapelbereich an der Rolle 25 anliegt und von diesem zurückgehalten wird, und während die Schwenkbewegung der 22 Gleitstütze fortgesetzt wird, so dass der Behälterstapel 2a eine immer schrägere Lage einnimmt. Der Behälterstapel 2a rutscht schließlich entlang der Gleitstütze 22 abwärts, bis der oberste Behälter das Ende der Gleitstütze 22 passiert hat und der Stapel waagrecht auf dem Förderer 3b, mit den Behälterböden 6a nach vorne weisend, zu liegen kommt, der den nun liegende Stapel 2 zur Vorrichtung gemäß Fig. 1 weitertransportiert (s. Fig. 3d). Die Gleitstütze 22 schwenkt nun in die vertikale Ausgangslage zurück, um den nächsten vertikalen Behälterstapel 2a' zu stützen.

Günstigerweise wird der herantransportierte Behälterstapel 2a von der Seite her, über einen Querförderer 3c, in die Umlegeeinrichtung 20 befördert (s. Fig. 3e), da es dann möglich ist, die Gleitstütze 22 einfach nur schwenkbar anzubringen.

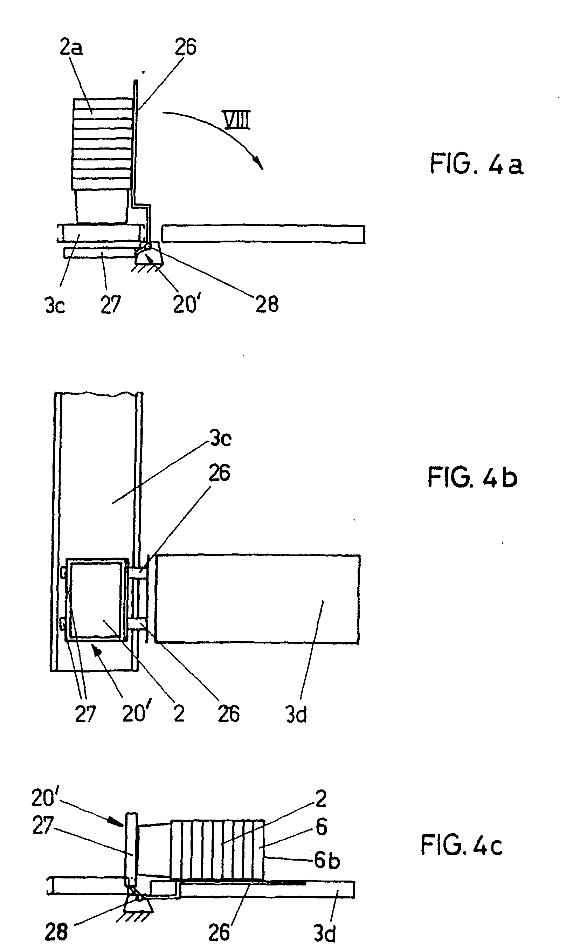

In Fig. 4 ist eine andere Stapelumlegeeinrichtung 20' dargestellt, wobei Fig. 4a eine Seitenansicht und Fig. 4b eine Draufsicht auf die Stapelumlegeeinrichtung 20' mit noch stehendem vertikalen Behälterstapel 2a darstellt. Der Behälterstapel 2a steht an senkrechten Gabelarmen 26 an und befindet sich auf dem Förderer 3c, z.B. einem Rollenförderer, oberhalb von waagrechten Gabelarmen 27, die ungefähr rechtwinkelig zu den Gabelarmen 26 angeordnet sind. Der Behälterstapel 2a kann mit dem Förderer 3c in diese Position bis zum Anschlag an den Gabelarmen 26, geführt oder auf irgend eine andere Weise auf die Gabelarme 27 aufgesetzt werden. Die abgewinkelten Gabelarme 26, 27 bilden eine Baueinheit und sind um ihre waagrechte Winkelachse 28 um ca. 90° schwenkbar gelagert.

Die ursprünglich vertikalen, langen Gabelarme 26 werden zum Umlegen des Stapels 2a in Richtung des Pfeils VIII (s. Fig. 4a) in die Waagrechte geschwenkt und wirken dabei als Stütze für den Stapel 2a. Der Behälterstapel 2a wird dabei von den ursprünglich waagrechten, kurzen Gabelarmen 27 gehoben, die sich dabei z.B. zwischen Rollen des Rollenförderers 3c hindurch nach oben bewegen, und in eine liegende Stellung gekippt, vgl. den liegenden Stapel 2 in Fig. 4c, wobei gleichzeitig die Gabelarme 26 in eine horizontale Stellung geschwenkt werden, so dass der Behälterstapel 2a kontrolliert umgelegt wird. Er liegt nun quer zum Förderer 3c auf einer Unterlage 3d, bevorzugt einem weiteren Förderer, in diesem Fall mit den Behälteröffnungen 6b nach vorne weisend (s. Fig. 4c). Der Förderer 3d führt den umgelegten Behälterstapel 2 dann der eigentlichen Entstapelungsvorrichtung 1' gemäß Fig. 2 zu.

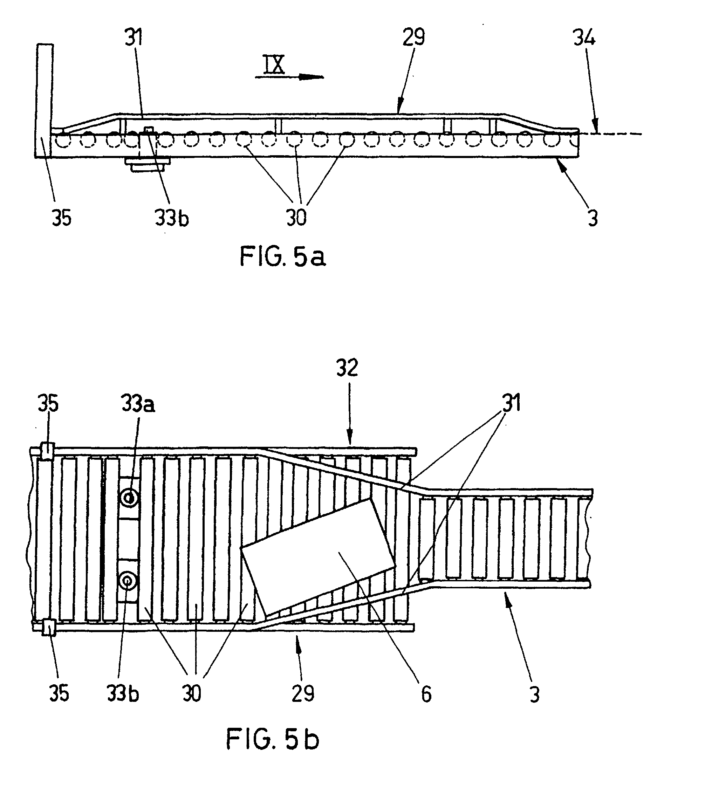

In Fig. 5a und 5b ist eine Einrichtung 29 zum Längsausrichten von quer zum Förderer 3 stehenden, wie vorstehend beschrieben vereinzelten Behältern 6 in Seitenansicht bzw. Draufsicht dargestellt. Die Behälter 6.werden vom Förderer 3, hier z.B. einem Rollenförderer, in Richtung des Pfeiles IX (Fig. 5a) vorbewegt, von dem zumindest einige der Rollen 30 angetrieben sind. Zu beiden Seiten des Förderers 3 ist jeweils eine Führung 31 vorhanden, um die Behälter 6 entlang des Förderers 3 zu führen; die Führungen 31 verengen sich in Transportrichtung, bis der Abstand zwischen ihnen nur den Durchgang eines in Längsrichtung ausgerichteten Behälters 6 zulässt. Vor dieser Verengung 32 sind zwei individuell hochschiebbare Zylinder 33a bzw. 33b als Anschläge nebeneinander am Förderer 3 angebracht. Je nachdem in welche Richtung der Behälter 6 gedreht werden soll (zur Ausrichtung z.B. mit einer Behälterlasche oder einem Barcode auf eine bestimmte Seite), wird der eine Zylinder, z.B. 33a, über die Förderebene 34 hochgeschoben, wogegen der andere Zylinder, z.B. 33b, unter der Förderebene 34 bleibt oder zurückgezogen wird, so dass er kein Hindernis für den ankommenden Behälter 6 bildet. Das Steuersignal für diese Ansteuerung der Zylinder 33a, 33b kann von einem Detektor 35 kommen, der registriert, auf welcher Seite des Behälters 6 sich die Behälterlasche oder der Barcode befindet. In Fig. 5b wurde der in Förderrichtung (Pfeil IX in Fig. 5 a) rechte Zylinder 33b abgesenkt, wogegen der linke Zylinder 33a aus der Förderebene 34 hochgeschoben wurde. Der herantransportierte Behälter 6 wird auf seiner einen - linken - Seite vom herausstehenden Zylinder 33a durch Anschlagen zurückgehalten, wogegen die andere - rechte - Seite des Behälters 6 frei ist, so dass der Behälter 6 durch den Förderer 3 unter Verdrehen um den Anschlag, d.h. den Zylinder 33a, weiterbewegt wird, da die rechte Behälterseite gegenüber der linken Behälterseite voreilt. Der schon etwas gedrehte Behälter 6 wird, wie aus Fig. 5b ersichtlich ist, sodann in der Verengung 32 zur völligen Längsausrichtung gezwungen und vom Förderer 3 weitergeführt.

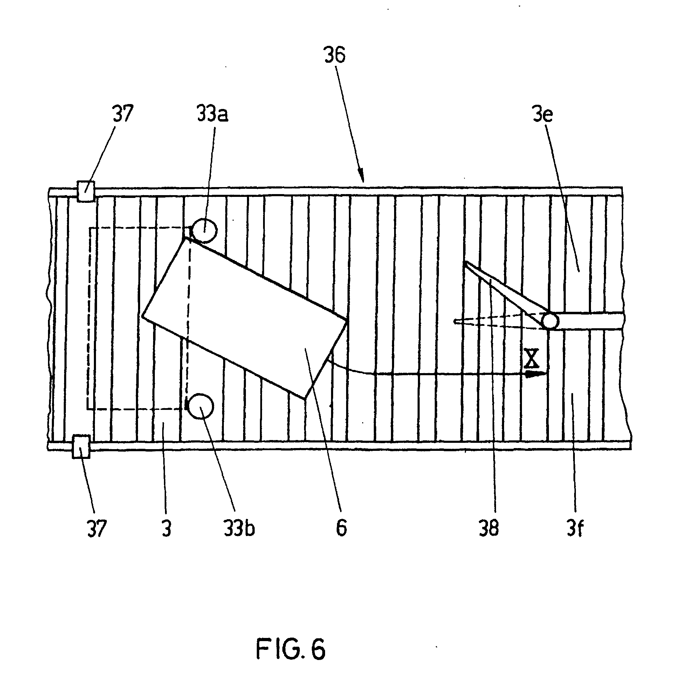

In Fig. 6 ist eine Weicheneinrichtung 36 zur Aufteilung der Behälter 6 je nach Behälterhöhe auf zwei getrennte Förderstrecken oder Folgeförderer 3e bzw. 3f gezeigt. Wie die in Fig. 5 gezeigte Einrichtung 29 zur Längsausrichtung der Behälter 6 weist auch die Weicheneinrichtung 36 zwei nebeneinander am Förderer 3 angebrachte, ein- und ausschiebbare Zylinder 33a bzw. 33b auf. Ein Behälterhöhen-Sensor 37, z.B. mit Lichtschranken, die in bestimmten Höhen angebracht sind, kann die Höhe des vorbeigeführten Behälters 6 registrieren und jeweils einem der ein- und auschiebbaren Zylinder 33a und 33b ein Signal zum Ausfahren bzw. Einziehen schicken. Gleichzeitig kann ein schwenkbarer Einlauf-Hebel 38 angesteuert werden, der einerseits den Weg zum einen Folgeförderer, z.B. 3e, versperrt und andererseits den Behälter 6 zum anderen Folgeförderer, z.B. 3f, leitet. In Fig. 6 steht der in Transportrichtung X linke Zylinder 33a aus der Förderebene heraus, wogegen der rechte Zylinder 33b unter die Förderebene 34 gesenkt ist. Der Behälter 6 läuft dadurch gegen den linken Zylinder 33a auf, wobei er um seine eigene Achse verdreht wird. Nach genügender Drehung wird der Behälter 6 am Zylinder 33a vorbeitransportiert und gelangt in Richtung des Pfeils X auf den rechten Folgeförderer 3f, wobei der Hebel oder Schwenkarm 38 diese Bewegung unterstützt und den linken Folgeförderer 3e sperrt.

In Fig. 7a bis 7e ist eine weitere Ausführungsform einer Stapelumlegeeinrichtung 20'' in Seitenansicht dargestellt, wobei der Ablauf des Umlegens schematisch veranschaulicht ist. Der vertikale, stehende Behälterstapel 2a wird auf dem Förderer 3d zur Stapelumlegeeinrichtung 20'', etwa wie schon in Fig. 4 beschrieben, herantransportiert. Die Stapelumlegeeinrichtung 20'' weist wiederum zwei Gabelarm-Paare 26, 27 auf, wobei die kürzeren Gabelarme 27 des einen Paares anfangs, gemäß Fig. 7a, unterhalb des zum Umlegen herangeförderten Stapels 2a vorliegen und die anderen, längeren Gabelarme 26 durch einen Druckzylinder 39, der um eine Achse 40 schwenkbar gelagert ist, aus einer unterhalb der Förderebene gegebenen horizontalen Stellung in die vertikale Stellung hochgeschwenkt werden, bis sie am Behälterstapel 2a anliegen. In Fig. 7b sind die Gabelarme 26 in dieser vertikalen Stellung in Anlage am Behälterstapel 2a gezeigt. Ein unterhalb der waagrechten Gabelarme 27 vorgesehener, gesonderter, ebenfalls um eine Achse 42 (s. Fig. 7c) schwenkbar gelagerter Druckzylinder 41 greift an diesen Gabelarmen 27 an, so dass die waagrechten Gabelarme 27 und damit der Behälterstapel 2a durch ein Ausfahren der Kolbenstange des Druckzylinders 41 allmählich in eine schräge Stellung gebracht werden (Fig. 7c), wobei zugleich der Stapel 2a und die Gabelarme 26 in eine schräge Lage gebracht und nun durch den Druckzylinder 39 abgestützt werden. Der Druckzylinder 39 wird während dieser Umlegebewegung allmählich eingezogen, wobei er gleichzeitig um seine Achse 40 schwenkt. Der Druckzylinder 41 wird ebenfalls um seine Achse 42 geschwenkt und drückt die kürzeren Gabelarme 27 zumindest so lange hoch, bis der Behälterstapel 2a zu kippen beginnen würde (d.h. bis sein Schwerpunkt, in vertikaler Projektion gesehen, nicht mehr über der durch die Gabelarme 27 definierten Basisfläche vorliegt). Danach wird der Druckzylinder 41 wieder eingezogen, und die Gabelarme 27 werden in die waagrechte Ausgangsstellung geschwenkt (Fig. 7d), während gleichzeitig die Gabelarme 26, auf denen nun die Masse des Behälterstapels 2a lastet, allmählich zusammen mit dem Behälterstapel 2a weitergeschwenkt und schließlich ebenfalls in die waagrechte Stellung gebracht werden (Fig. 7e). Nun wird der umgelegte Behälterstapel 2a von den Förderern 3d und 3 von der Stapelumlegeeinrichtung 20'' weg und zur Vorrichtung 1 zum Entstapeln hin bewegt, wo die Entstapelung wie vorstehend z.B. anhand der Fig.1 beschrieben erfolgt.

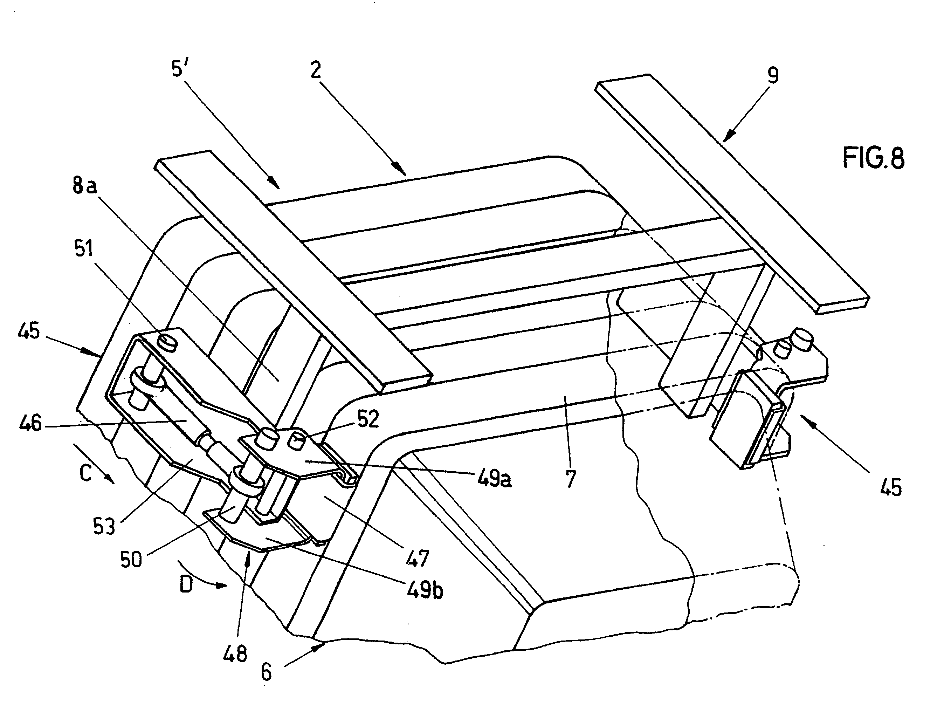

In Fig. 8 ist eine modifizierte Greifeinrichtung 5' für die Vorrichtung 1 zum automatischen Entstapeln eines liegenden Behälterstapels 2, insbesondere in der Ausführung gemäß Fig. 1, in vergrößertem Maßstab schaubildlich dargestellt, wobei nur die eine Seite der Greifeinrichtung 5' hinsichtlich ihrer Einzelteile, insbesondere mit einer Greifbackeneinheit 45, näher veranschaulicht ist, wogegen die andere Seite teilweise verdeckt ist, jedoch gleich aufgebaut ist, so dass es genügt, die eine Seite zu erläutern.

Jede Greifbackeneinheit 45 weist einen Druckzylinder 46 mit einer horizontalen Ausrichtung auf, der an einem Halter, wieder in Form des Schenkels 8a eines Rahmens 9, gelagert ist. Eine Greifbacke 47 ist an einem Schwenkhebel 48 angebracht, der vom Druckzylinder 46 betätigt wird. Der Schwenkhebel 48 weist eine obere Platte 49a und eine untere Platte 49b auf, zwischen denen an einem Ende die mit einem Friktionsmaterial (Gummi) ausgerüstete Greifbacke 47 gehalten wird. Am anderen Ende ist zwischen den Platten 49a, 49b eine Achse 50 angebracht, an der der Druckzylinder 46, der um eine Achse 51 schwenkbar gelagert ist, mit seiner Kolbenstange angreift.

Der Schwenkhebel 48 ist seinerseits um eine Schwenkachse 52 schwenkbar gelagert, die an einer Konsole 53 angebracht ist, welche fest am jeweiligen Schenkel 8a des Rahmens 9 angebracht, z.B. angeschweißt, ist und auch den Druckzylinder 46 über die Achse 51 trägt.

Drückt der Druckzylinder 46 in Richtung C, wobei er um seine Achse 51 schwenkt, so wird der Schwenkhebel 48 in Richtung D um die Achse 52 geschwenkt. Die Greifbacke 47 wird durch diese Bewegung des Schwenkhebels 48 gegen den bundförmigen Rand 7 des ersten Behälters 6 des Behälterstapels 2 gedrückt. Durch die bereits in Fig. 1 beschriebene Bewegung des Rahmens 9 wird der erste Behälter 6 dann vom Behälterstapel 2 wegbewegt, wobei diese Bewegung im Sinne einer Verstärkung der Klemmwirkung der Greifbacken 47 wirkt. Durch ein Einziehen des Druckzylinders 46 wird der Schwenkhebel 48 wieder in die der Richtung D entgegengesetzten Richtung geschwenkt, so dass die Greifbacken 47 den Rand 7 des ersten Behälters 6 wieder freigeben.

## Patentansprüche

1. Vorrichtung (1,1') zum automatischen Entstapeln von ineinander gestapelten liegenden Behältern (6,6') unter Absetzen auf eine Unterlage, z.B. einen Förderer (3a), mit der Behälteröffnung (6b) nach oben, mit einer Greifeinrichtung (5) zum Erfassen und Herausbewegen des jeweiligen ersten Behälters (6) aus einem liegenden Behälterstapel (2,2'), wobei die Greifeinrichtung (5,5') an einer zumindest im Wesentlichen in Stapelrichtung (I,II) beweglichen Haltereinheit angebracht ist, und mit einer Klemmeinrichtung (4) zum Festhalten des liegenden Behälterstapels (2,2') unter Freilassung des vordersten Behälters (6), **dadurch gekennzeichnet, dass** die Greifeinrichtung (5,5') mit seitlichen, die Behälter (6, 6') seitlich erfassenden Druckzylindern (5a; 46) versehen ist, die horizontale Achsen auf demselben Niveau aufweisen und mit ihnen zugeordneten sich oberhalb von ihnen er streckenden, die Haltereinheit bildenden Haltern (8a, 8b) verbunden sind.

2. Vorrichtung nach Anspruch 1, **dadurch gekennzeichnet, dass** die Druckzylinder (5a) drehbar an den Haltern (8a, 8b) angeordnet sind.

3. Vorrichtung nach Anspruch 1, **dadurch gekennzeichnet, dass** die Halter (8a, 8b) linear, parallel zum Behälterstapel (2), verschiebbar gelagert sind.

4. Vorrichtung nach Anspruch 3, **dadurch gekennzeichnet, dass** die Halter (8a, 8b), z.B. Schenkel eines Rahmens (9), an einer linearen Führung (10) gelagert sind.

5. Vorrichtung nach Anspruch 3 oder 4, **dadurch gekennzeichnet, dass** der die vereinzelten Behälter (6) aufnehmenden Unterlage (3a) eine relativ zu ihr höher angeordnete Kante (14) zum Kippen der einzelnen Behälter (6) vorgeordnet ist, zu der der Behälter mit Hilfe der Greifeinrichtung (5) bzw. durch ein Förderband (3) bewegt wird.

6. Vorrichtung nach Anspruch 1 oder 2, **gekennzeichnet durch** eine Kurvensteuerung für die Halter (8a', 8b') um den vordersten Behälter (6) gemäß einer vorgegebenen, insbesondere bogenförmigen Bewegung aus dem Behälterstapel (2') herauszubewegen und unter Schwenken in eine Lage mit der Behälteröffnung (6b) nach oben auf die Unterlage, z.B. den Förderer (3), abzusetzen.

7. Vorrichtung nach Anspruch 6, **dadurch gekennzeichnet, dass** die Halter (8a', 8b'), z.B. Schenkel eines Rahmens (9'), schwenkbar gelagert sind.

8. Vorrichtung nach Anspruch 6, **dadurch gekennzeichnet, dass** den Haltern eine Kulissenführung zur Bewegungssteuerung zugeordnet ist.

9. Vorrichtung nach Anspruch 6, **dadurch gekennzeichnet, dass** den Haltern ein Viergelenk zur Bewegungssteuerung zugeordnet ist.

10. Vorrichtung nach einem der Ansprüche 1 bis 9, **dadurch gekennzeichnet, dass** als Antrieb für die Halter (8a, 8b) ein Druckzylinder (12) vorgesehen ist.

11. Vorrichtung nach einem der Ansprüche 1 bis 10, **dadurch gekennzeichnet, dass** die Greifeinrichtung (5') Greifbacken (47) zum Anpressen an die Behälter (6) aufweist, die an Schwenkhebeln (48) angebracht sind, an denen die Druckzylinder (46) angreifen.

12. Vorrichtung nach einem der Ansprüche 1 bis 11, **dadurch gekennzeichnet, dass** die Klemmeinrichtung (4) einen zumindest den zweiten Behälter (6') im Stapel (2; 2') nach unten drückenden Druckzylinder (13), vorzugsweise in Verbindung mit einem den gesamten liegenden Behälterstapel (2; 2') anhebenden Hubmechanismus (16), enthält.

13. Vorrichtung nach einem der Ansprüche 1 bis 12, **dadurch gekennzeichnet, dass** der Klemmeinrichtung (4) ein aus dem Weg der Behälter (6) bewegbarer, z.B. schwenkbarer Anschlag (17) für den Behälterstapel (2; 2') zugeordnet ist.

14. Vorrichtung nach Anspruch 12 oder 13, **dadurch gekennzeichnet, dass** eine Triggerlichtschranke (18) zur Betätigung des Druckzylinders (13) und/oder Anschlags (17) vorgesehen ist.

15. Vorrichtung nach einem der Ansprüche 1 bis 14, **dadurch gekennzeichnet, dass** eine Überwachungslichtschranke (19) zur Erfassung der verbleibenden Behälter des Stapels (2; 2') vorgesehen ist.

16. Vorrichtung nach einem der Ansprüche 1 bis 14, **dadurch gekennzeichnet, dass** der Greifeinrichtung (5,5') eine pneumatisch betätigte Stapelumlegeeinrichtung (20; 20'; 20") vorgeordnet ist.

17. Vorrichtung nach Anspruch 16, **dadurch gekennzeichnet, dass** die Stapelumlegeeinrichtung (20) eine in der Ruhestellung vertikale, um eine horizontale eine Achse (21) schwenkbare Stapel-Gleitstütze (22) enthält.

18. Vorrichtung nach Anspruch 17, **dadurch gekennzeichnet, dass** gegenüber der Gleitstütze (22) eine einen Stapel-Anschlag beim Umlegen des Stapels bildende Rolle (25) an einem Gestell (24) angebracht ist.

19. Vorrichtung nach Anspruch 16, **dadurch gekennzeichnet, dass** die Stapelumlegeeinrichtung (20') abgewinkelte Gabelarme (26, 27) enthält, die um ihre waagrechte Winkelachse (28) schwenkbar gelagert sind.

20. Vorrichtung nach Anspruch 16, **dadurch gekennzeichnet, dass** die Stapelumlegeeinrichtung (20) relativ zueinander bewegliche Stützen (26) für den Behälterstapel (2a) aufweist, denen gesonderte Druckzylinder (39) zu ihrer unabhängigen Verschwenkung zugeordnet sind.

21. Vorrichtung nach einem der Ansprüche 1 bis 20, **gekennzeichnet durch** eine Behälterdreheinrichtung (29) zum Verdrehen der entstapelten kistenförmigen Behälter (6) aus ihrer Querausrichtung in eine Längsausrichtung.

22. Vorrichtung nach Anspruch 21, **dadurch gekennzeichnet, dass** der Behälterdreheinrichtung (29) eine Steuereinheit zum Verdrehen jedes Behälters (6) mit einer vorbestimmten Seite nach vorne zugeordnet ist.

23. Vorrichtung nach Anspruch 21 oder 22, **dadurch gekennzeichnet, dass** die Behälterdreheinrichtung (29) zwei nebeneinander am als Unterlage vorgesehenen Förderer (3) angebrachte, selektiv über die Förderebene ausschiebbare Anschläge, z.B. Zylinder (33a, 33b), aufweist, wonach sich der Förderer (3) vorzugsweise verengt.

24. Vorrichtung nach einem der Ansprüche 1 bis 23, **gekennzeichnet durch** eine Weicheneinrichtung (36) zur Aufteilung der vereinzelten kistenförmigen Behälter (6), z.B. je nach Behälterhöhe, auf verschiedene Förderstrecken (3e, 3f).

25. Vorrichtung nach Anspruch 24, **dadurch gekennzeichnet, dass** der Weicheneinrichtung (36) ein Behälterhöhen-Sensor, z.B. mit Lichtschranken (37) in verschiedenen Höhen, vorgeordnet ist.

## Claims

1. An arrangement (1, 1') for automatically denesting containers (6, 6') nested in each other in lying posture, by depositing them on a support, e.g. a conveyor (3a), with the container opening (6a) facing upwards, the arrangement comprising a gripping means (5) for gripping the respective first container (6) and moving it out of a lying container stack (2, 2'), the gripping means (5, 5') being arranged on a holding unit at least substantially movable in stacking direction (I, II), and a clamping means (4) for holding back the lying container stack (2, 2'), with the foremost container (6) being left free, **characterised in that** the gripping means (5, 5') is provided with lateral pressure-medium cylinders (5a; 46) laterally gripping the containers (6, 6'), which pressure medium cylinders have horizontal axes on the same level and are connected with associated holding elements (8a, 8b) extending thereabove and forming the holding unit.

2. An arrangement according to claim 1, **characterised in that** the pressure medium cylinders (5a) are rotatably arranged on the holding elements (8a, 8b).

3. An arrangement according to claim 1, **characterised in that** the holding elements (8a, 8b) are mounted to be linearly displaceable in parallel to the container stack (2).

4. An arrangement according to claim 3, **characterised in that** the holding elements (8a, 8b), e.g., the legs of a frame (9), are mounted on a linear guide (10).

5. An arrangement according to claim 3 or 4, **characterised in that** the support (3a) receiving the denested containers (6) is preceded by an edge (14) provided at a higher level relative thereto, for tilting of the individual containers (6), the container being moved towards the edge by aid of the gripping means (5), or by a conveyer belt (3).

6. An arrangement according to claim 1 or 2, **characterised by** a cam control for the holding elements (8a', 8b') so as to move the foremost container (6) according to a predetermined, in particular arcuate, movement out of the container stack (2'), and to deposit it on the support, e.g. the conveyor (3), by pivoting it into a position with the container opening (6b) facing upwards.

7. An arrangement according to claim 6, **characterised in that** the holding elements (8a', 8b'), e.g. the legs of a frame (9'), are pivotably mounted.

8. An arrangement according to claim 6, **characterised in that** the holding elements have an associated connecting-link guide for control of their movement.

9. An arrangement according to claim 6, **characterised in that** the holding elements have an associated four-bar linkage for control of their movement.

10. An arrangement according to any one of claims 1 to 9, **characterised in that** a pressure medium cylinder (12) is provided as drive for the holding elements (8a, 8b).

11. An arrangement according to any one of claims 1 to 10, **characterised in that** the gripping means (5') comprises gripping jaws (47) to be pressed against the containers (6), which are attached on pivoting levers (48) engaged by the pressure medium cylinders (46).

12. An arrangement according to any one of claims 1 to 11, **characterised in that** the clamping means (4) contains a pressure medium cylinder (13) which pushes at least the second container (6') in the stack (2; 2') downwards, preferably in combination with a lifting mechanism (16) which lifts the entire lying container stack (2; 2').

13. An arrangement according to any one of claims 1 to 12, **characterised in that** the clamping means (4) has an associated stop (17) for the container stack (2; 2'), which stop can be moved out of the way of the containers (6), e.g. by pivoting.

14. An arrangement according to claim 12 or 13, **characterised in that** a trigger photoelectric barrier (18) is provided for actuating the pressure medium cylinder (13) and/or the stop (17).

15. An arrangement according to any one of claims 1 to 14, **characterised in that** a monitoring photoelectric barrier (19) is provided for sensing the remaining containers of the stack (2; 2').

16. An arrangement according to any one of claims 1 to 14, **characterised in that** the gripping means (5, 5') is preceded by a pneumatically actuated stack turning device (20; 20', 20").

17. An arrangement according to claim 16, **characterised in that** the stack turning device (20) contains a stack sliding support (22) which is vertical in the resting position and is pivotable about a horizontal axle (21).

18. An arrangement according to claim 17, **characterised in that** a roller (25) is mounted opposite the sliding support (22) on a stand (24), which roller forms a stack stop when turning the stack into the horizontal position.

19. An arrangement according to claim 16, **characterised in that** the stack turning device (20') comprises angled forked arms (26, 27) mounted so as to be pivotable about their horizontal angle axis (28).

20. An arrangement according to claim 16, **characterised in that** the stack turning device (20) comprises supporting devices (26) for the container stack (2a) which are movable relative to each other and which have associated separate pressure medium cylinders (39) for their independent pivotal movement.

21. An arrangement according to any one of claims 1 to 20, **characterised by** a container rotating device (29) for rotating the denested box-type containers (6) from their transverse orientation into a longitudinal orientation.

22. An arrangement according to claim 21, **characterised in that** the container rotating device (29) has an associated control unit for rotating each container (6) with a pre-determined side facing forward.

23. An arrangement according to claim 21 or 22, **characterised in that** the container rotating device (29) comprises two stops, e.g. cylinders (33a, 33b), adjacently arranged on the conveyor (3) provided as the support and selectively projectable to above the conveying plane, after which the conveyor (3) preferably narrows.

24. An arrangement according to any one of claims 1 to 23, **characterised by** a shunting means (36) for distributing the denested box-type containers (6) to various conveying paths (3e, 3f), e.g. in accordance with their container height.

25. An arrangement according to claim 24, **characterised in that** the shunting means (36) has a preceding container height sensor, e.g. with photoelectric barriers (37) at different levels.

## Revendications

1. Dispositif (1,1') pour le désempilage automatique de conteneurs (6,6') empilés les uns dans les autres par dépôt sur une base, par exemple un convoyeur (3a), avec l'ouverture (6b) des conteneurs vers le haut, comportant un dispositif de préhension (5) pour la saisie et l'enlèvement du premier conteneur respectif (6) d'un empilement de conteneurs (2, 2'), dans lequel le dispositif de préhension (5, 5') est rapporté à une unité support mobile au moins pour l'essentiel dans la direction de l'empilement (I, II), et un dispositif de serrage (4) pour fixer l'empilement de conteneurs (2, 2') lors de la libération du conteneur (6) le plus en avant, **caractérisé en ce que** le dispositif de préhension (5, 5') est muni de vérins latéraux (5a ; 46) pour la saisie latérale des conteneurs (6, 6'), qui présentent des axes horizontaux sur le même niveau et sont reliés à des supports associés (8a, 8b) qui s'étendent au- dessus de ceux- ci et qui constituent l'unité support.

2. Dispositif selon la revendication 1 **caractérisé en ce que** les vérins (5a) sont montés rotatifs sur les supports (8a, 8b).

3. Dispositif selon la revendication 1 **caractérisé en ce que** les supports (8a, 8b) sont linéaires et montés coulissants parallèlement à l'empilement de conteneurs (2).

4. Dispositif selon la revendication 3 **caractérisé en ce que** les supports (8a, 8b), par exemple les montants d'un cadre (9), sont montés sur une coulisse linéaire (10).

5. Dispositif selon la revendication 3 ou 4 **caractérisé en ce qu'**une arête (14) pour le basculement de différents conteneurs (6) est réalisée à une hauteur supérieure à celle de la base (3a) recevant le différents conteneurs (6), sur laquelle est déplacé le conteneur à l'aide du dispositif de préhension (5) ou par une bande transporteuse (3).

6. Dispositif selon la revendication 1 ou 2 **caractérisé par** un réglage automatique d'inclinaison des supports (8a', 8b') pour déplacer et extraire le conteneur (6) le plus en avant selon un mouvement prédéterminé, notamment un mouvement incurvé à partir de l'empilement de conteneurs (2') et pour le déposer sur la base, par exemple le convoyeur, par basculement dans une position avec l'ouverture (6b) du conteneur tournée vers le haut.

7. Dispositif selon la revendication 6 **caractérisé en ce que** les supports (8a', 8b'), par exemple les montants d'un cadre (9'), sont montés basculants.

8. Dispositif selon la revendication 6 **caractérisé en ce qu'**une coulisse de guidage est associée aux supports pour le réglage automatique du mouvement.

9. Dispositif selon la revendication 6 **caractérisé en ce qu'**un ensemble de quatre articulations est agencé pour le réglage automatique du mouvement.

10. Dispositif selon l'une des revendications 1 à 9 **caractérisé en ce qu'**un vérin (12) est prévu comme mécanisme d'entraînement des supports (8a, 8b).

11. Dispositif selon l'une des revendications 1 à 10 **caractérisé en ce que** le dispositif de préhension (5') comporte des mâchoires de préhension (47) destinées à être pressées sur les conteneurs (6), qui sont rapportées à des leviers basculants (48) avec lesquels les vérins (46) sont en prise.

12. Dispositif selon l'une des revendications 1 à 11 **caractérisé en ce que** le dispositif de serrage (4) contient un vérin (13) exerçant une pression vers le bas au moins sur les deux conteneurs (6') dans l'empilement (2, 2'), de préférence en liaison avec un mécanisme d'élévation (16) soulevant l'ensemble de l'empilement de conteneurs (2 ; 2').

13. Dispositif selon l'une des revendications 1 à 12 **caractérisé en ce qu'**une butée (17) pour l'empilement des conteneurs déplaçable hors du chemin des conteneurs (6), par exemple pouvant basculer, est associée au dispositif de serrage (4).

14. Dispositif selon la revendication 12 ou 13 **caractérisé en ce qu'**une barrière lumineuse (18) de déclenchement est prévue pour l'actionnement du vérin (13) et/ou de la butée (17).

15. Dispositif selon l'une des revendications 1 à 14 **caractérisé en ce qu'**une barrière lumineuse (19) de surveillance est prévue pour la saisie des conteneurs restants de l'empilement (2 ; 2').

16. Dispositif selon l'une des revendications 1 à 14 **caractérisé en ce qu'**un dispositif de renversement (20 ; 20' ; 20") de l'empilement actionné pneumatiquement est disposé en amont du dispositif de préhension (5, 5').

17. Dispositif selon la revendication 16 **caractérisé en ce que** le dispositif de renversement (20) de l'empilement comporte un montant de glissement (22) de l'empilement, vertical en position de repos et pouvant basculer autour d'un axe horizontal (21).

18. Dispositif selon la revendication 17 **caractérisé en ce qu'**un rouleau (25) formant butée pour l'empilement lors du renversement de l'empilement est rapporté à un châssis (24) en regard du montant de glissement (22).

19. Dispositif selon la revendication 16 **caractérisé en ce que** le dispositif de renversement (20') de l'empilement comporte des bras de fourche (26, 27) en U qui sont montés basculants autour de leurs axes horizontaux (28).

20. Dispositif selon la revendication 16 **caractérisé en ce que** le dispositif de renversement (20) d'empilement est pourvu d'appuis (26) pour l'empilement de conteneurs (2a) mobiles l'un par rapport à l'autre, avec lesquels coopèrent des vérins spécifiques (39) pour leur basculement indépendant.

21. Dispositif selon l'une des revendications 1 à 20 **caractérisé par** un dispositif de rotation des conteneurs (29) pour la rotation des conteneurs (6) empilés en forme de caisse à partir de leur orientation transversale dans une orientation longitudinale.

22. Dispositif selon la revendication 21 **caractérisé en ce qu'**au dispositif de rotation (29) des conteneurs est associée une unité de commande de la rotation de chaque conteneur (6) d'un côté prédéterminé vers l'avant.

23. Dispositif selon la revendication 21 ou 22 **caractérisé en ce que** le dispositif de rotation (29) des conteneurs comporte deux butées, par exemple des cylindres (33a, 33b) rapportés l'un à côté de l'autre sur le convoyeur (3) prévu comme base, et pouvant être écartées l'une de l'autre sélectivement au- dessus du plan du convoyeur, de sorte que le convoyeur (3 ) peut de préférence se rétrécir.

24. Dispositif selon l'une des revendications 1 à 23 **caractérisé en ce qu'**il comprend un dispositif d'aiguillage (36) pour la répartition des différents conteneurs (6) en forme de caisse, par exemple en fonction de la hauteur des conteneurs, sur différentes voies de transport (3e, 3f).

25. Dispositif selon la revendication 24 **caractérisé en ce qu'**un détecteur de la hauteur des conteneurs, par exemple au moyen de barrières lumineuses (37) à différentes hauteurs, est disposé en amont du dispositif d'aiguillage (36).
